# EUROPEAN PATENT SPECIFICATION

(11) **EP 2 984 848 B1**
(45) Date of publication and mention of the grant of the patent: **04.12.2019**
(21) Application number: 14856345.5
(22) Date of filing: 27.10.2014
(51) Int. Cl.: H04N 21/20, H04L 29/06, H04L 29/08

(54) **ASSOCIATING REPRESENTATIONS IN ADAPTIVE STREAMING**
ZUORDNUNG VON DARSTELLUNGEN IN EINEM ADAPTIVEN STREAMING
ASSOCIATION DE REPRÉSENTATIONS DANS UNE LECTURE EN CONTINU ADAPTATIVE

(30) Priority: 25.10.2013 US 201361895849 P
(43) Date of publication of application: 17.02.2016
(73) Proprietor: Huawei Technologies Co., Ltd., Longgang District Shenzhen, Guangdong 518129 (CN)
(72) Inventor: ZHANG, Shaobo, Shenzhen Guangdong 518129 (CN); WANG, Xin, Rancho Palos Verdes, California 90275 (US)
(74) Representative: Pfenning, Meinig & Partner mbB
(86) International application number: PCT/US2014/062457
(87) International publication number: WO 2015/061794

(56) References cited:
- US-A1- 2011 307 545
- US-A1- 2012 023 253
- US-A1- 2012 278 495
- SHAOBO ZHANG ET AL: "Quality Information Signalling in MPD", 106. MPEG MEETING; 28-10-2013 - 1-11-2013; GENEVA; (MOTION PICTURE EXPERT GROUP OR ISO/IEC JTC1/SC29/WG11),, no. m31304, 24 October 2013 (2013-10-24), XP030059757,
- SHAOBO ZHANG ET AL: "Metadata Signaling for DASH using Metadata Tracks", 105. MPEG MEETING; 29-7-2013 - 2-8-2013; VIENNA; (MOTION PICTURE EXPERT GROUP OR ISO/IEC JTC1/SC29/WG11),, no. m30352, 30 July 2013 (2013-07-30), XP030058879,
- SHAOBO ZHANG ET AL: "Metadata Signaling for DASH using Index Files", 105. MPEG MEETING; 29-7-2013 - 2-8-2013; VIENNA; (MOTION PICTURE EXPERT GROUP OR ISO/IEC JTC1/SC29/WG11),, no. m30347, 29 July 2013 (2013-07-29), XP030058874,

## Description

### TECHNICAL FIELD

The present disclosure relates to communications systems and methods and in particular, to systems and methods for associating Representations with other Representations in adaptive streaming.

### BACKGROUND

Many television and movie viewers now desire on-demand access to video and other media content. As a first example, a television viewer may desire to watch a television show that he or she missed during the show's regular air time on television. The viewer may stream the show on demand over the Internet via a web browser or other application on a notebook computer, tablet computer, desktop computer, mobile telephone or other device, then view that show in the browser or other application. In other examples, a viewer may stream a movie on demand or may participate in a videoconference with other viewers.

Dynamic Adaptive Streaming over Hypertext Transfer Protocol (DASH) is a standard developed to provide such media content and is partially described in International Organization for Standardization (ISO)/International Electrotechnical Commission (IEC) 23009-1, First Edition, 2012 ("23009-1"), which is incorporated herein by reference in its entirety. In DASH, there are two main devices: the Hypertext Transfer Protocol (HTTP) server(s) that provide the content and the DASH client that requests the content and is associated with the viewer (or user). DASH leaves download control to the client, which can request content using the HTTP protocol according to its own streaming strategy.

DASH functions to partition each content component (e.g., video, audio, caption, quality information, rotating key, etc.) into a sequence of smaller segments - each segment being of a short interval of playback time. Each segment is made available to a DASH client in possibly multiple alternatives - each with a different characteristics, e.g., at a different bit rate or a different quality level for a video segment. As the content is played or consumed, the DASH client automatically selects a next segment (to be requested/played/consumed) from its alternatives (if any). This selection is based on various factors, including current network conditions. The resulting benefit is that the DASH client can adapt to changing network conditions and play back content at a highest level of quality without stalls or rebuffering events.

DASH clients can be any devices with DASH and media content playing functionality having wireless and/or wireline connectivity. For example, a DASH client may be a desktop or laptop computer, smartphone, tablet, set-top box, televisions connected to the internet, and the like, etc.

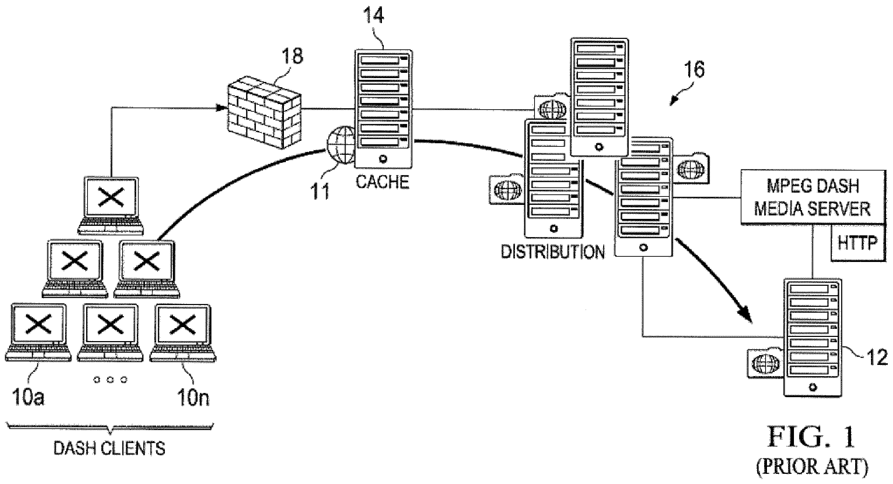

Now referring to FIGURE 1, there is illustrated a DASH standards-based adaptive media streaming model where portions of media streams and media segments are requested by DASH client devices 10a-10n using HTTP and are delivered by one or more DASH (HTTP) servers 12 via a network 11 (including the internet). As will be appreciated, the telecommunications network 11 may be any suitable network (or combinations of networks) enabling transmission of media content using HTTP. As an example only, the telecommunications network 11 is shown as including various telecommunications resources and infrastructures, such as network address translators and/or firewalls 18, caches 14 and Content Distribution Networks (CDNs) 16. These resources support on-demand, live streaming and time-shift applications and services to network-connected devices, such as the DASH clients 10a-10n.

Each DASH client 10 can dynamically adapt the bitrate, quality level or other characteristics of the requested media content/stream to changes in network conditions and/or other factors, by switching between different versions of the same media segment encoded at different bitrates, quality levels or other characteristics.

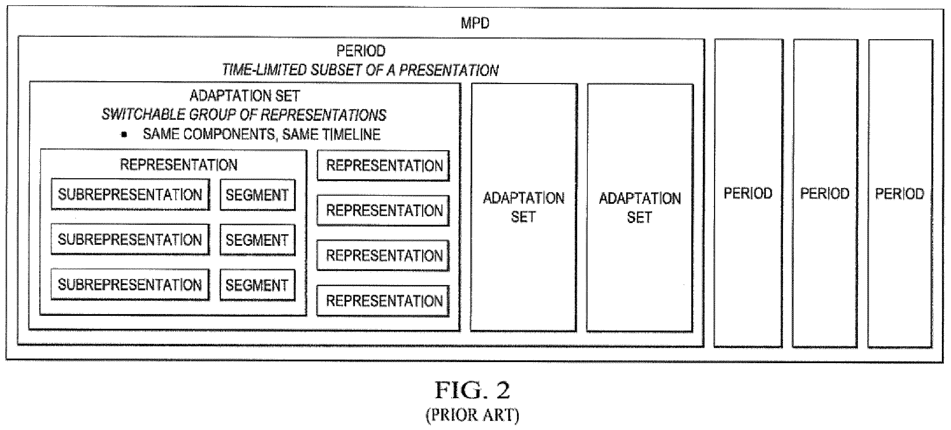

As illustrated in FIGURE 2, DASH is based on a hierarchical data model described by a Media Presentation Description (MPD) manifest (i.e. file), which defines formats to announce resource identifiers for a collection of encoded and deliverable versions of media content. The MPD is an XML document that advertises the available media content and provides information needed by the DASH client in order to select segments from Representations, i.e. the collection of encoded and deliverable versions of media content, make adaptation decisions, and retrieve selected segments from their servers via the network. Media content encoded into multiple Representations and other needed information may be composed of one or more contiguous segments.

The MPD provides sufficient information for the DASH client to provide a streaming service to the user by requesting segments from an HTTP (DASH) server and de-multiplexing (when needed), decoding and rendering the received media segments. The MPD is completely independent of segments and only identifies the properties needed to determine whether a Representation can be successfully played/consumed and its properties (e.g., whether segments start at random access points). It should also be noted that the MPD may also contain non-functional properties (e.g. quality and other descriptive metadata) of segments in a Representation.

To play the content, the DASH client first obtains the MPD. By parsing the MPD, the DASH client learns about the program timing, media-content availability, media types, resolutions, minimum and maximum bandwidths, and the existence of various encoded alternatives of multimedia components, accessibility features and required digital rights management (DRM), media-component locations on the network, and other content characteristics. Using this information, the DASH client selects the appropriate encoded alternative and starts streaming the content by fetching the segments using HTTP GET requests.

After appropriate buffering to allow for network throughput variations, the client continues fetching the subsequent segments and also monitors the network bandwidth fluctuations. Depending on its measurements, the client decides how to adapt to the available bandwidth by fetching segments of different alternatives (with lower or higher bitrates) to maintain an adequate buffer.

As further illustrated in FIGURE 2, a media segment is the minimal individually addressable unit of content data. It is the entity that can be downloaded using a URL advertised via the MPD. One example of a media segment is a 4-second part of a live broadcast, which starts at playout time 0:42:38, ends at 0:42:42, and is available within a 3-minute time window. Another example could be a complete on-demand movie, which is available for the whole period.

A Representation defines a single encoded version of the complete asset, or of a subset of its components. For example, a Representation may be an ISO-BMFF (Base Media File Formation) containing unmultiplexed 2.5 Mbps 720p AVC video, and separate ISO-BMFF Representations may be for 96 Kbps MPEG-4 AAC audio in different languages. Conversely, a single transport stream containing video, audio and subtitles can be a single multiplexed Representation. For example, as a multiplexed Representation with multiple media components, an ISO-BMFF file contains a track for 2.5 Mbps 720p AVC video and several tracks for 96 Kbps MPEG-4 AAC audio in different languages in the same file. A combined structure is possible: video and English audio may be a single multiplexed Representation, while Spanish and Chinese audio tracks are separate unmultiplexed Representations.

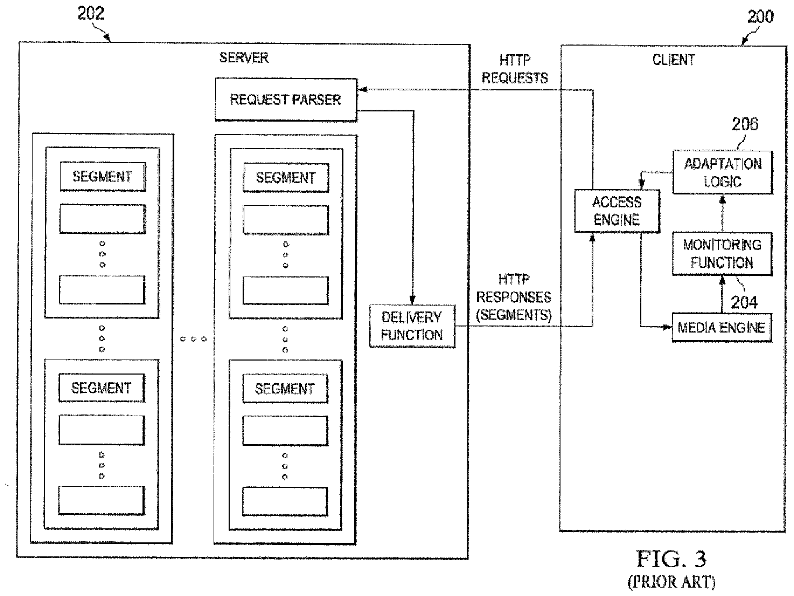

Turning to FIGURE 3, there is illustrated a functional block diagram of a conventional DASH client 200 interconnected with an HTTP (DASH) server 202, and further illustrating various function modules involved in the streaming process.

The Monitoring Function module 204 is responsible for collecting client environment information and generating/outputting some adaptation parameters, while the Adaptation Logic module 206 utilizes these parameters to make Representation selections and decisions.

What is of concern to the end user is not the absolute bitrate but rather, the perceived quality, the so called Quality of Experience (QoE). A DASH Core Experiment (CE) on Quality Driven Streaming, which was cited in "Metadata Signaling for DASH using Metadata Tracks" MPEG2013/m30352, Motion Picture Expert Group or ISO/IEC JTC1/SC29/WG11 by Shaobo Zhang et al., established that DASH clients are able to make more intelligent adaptation decisions when employing quality information of encoded media content stored in a metadata track in ISO-BMFF thus leading to reduced quality fluctuation of streamed content and consequently improved QoE, as well as less bandwidth consumption.

In the DASH specification ISO/IEC 23009-1, timed metadata, such as quality information, is proposed to be carried in a Representation. However, no mechanism currently exists to express the association of metadata Representation carrying e.g. quality information with the Representation containing media data. Existing attributes currently specified by the DASH specification such as @group, @dependencyId etc. are insufficient to express the association relationship between Representations.

In an exemplary, although not exhaustive example of a need to express the association relationship between Representations, the MPD needs to identify the association of a metadata Representation (e.g. quality information) and a media Representation to assist the client in making decisions on which Representation to select.

A straightforward solution would be to place the metadata Representation in a different Adaptation Set from the one containing the associated media Representation. However, there is no existing mechanism to express the relationship between Representations in separate Adaptation Sets. Although the attribute @group and the element Subset express relations among Adaptation Sets, the inclusiveness or exclusiveness they express is not the relation between a metadata Representation and a media Representation. As to the attribute @dependencyId, it is at a Representation level and the dependent Representation and depended (complementary) Representation(s) are in the same Adaptation Set. Also note that in a dependency relation, a dependent Representation cannot be rendered by itself. It can only be rendered with depended Representation(s). A metadata Representation depends on a media Representation, but it can be used alone prior to retrieval of the media Representation.

Therefore there is a need for systems and methods to enable expressing a relation between Representations and other Representations in separate Adaptation Sets.

"Quality Information Signaling in MPD", MPEG2013/m31304, Motion Picture Expert Group or ISO/IEC JTC1/SC29/WG11 (2013-10-24) by Shaobo Zhang et al., discloses that a Metadata Set is present which is associated with Adaptation Set containing media Representations with the same identifier.

"Metadata Signaling for DASH using Metadata Tracks", MPEG2013/m30352, Motion Picture Expert Group or ISO/IEC JTC1/SC29/WG11 (2013-7-30) by Shaobo Zhang et al., discloses that quality information can be carried in a metadata track.

US2012/023253A discloses that a method and apparatus are provided for transmitting adaptive streaming mechanism-based content. Representations, which include content components, are combined into a group. At least two of the group, a representation, and a content component type are combined into a subset.

### SUMMARY

The present invention is as defined in the appended independent claims. Systems, methods, and devices for signaling of timed metadata in adaptive streaming by providing association relationship between Representations, specifically providing association relationship between timed metadata Representations with media Representations.

In an embodiment, a method associates a first at least one Representation with a second at least one Representation in adaptive streaming wherein it is determined whether a first set containing the first at least one Representation is associated with a second set containing the second at least one Representation. An attribute is introduced listing identifiers of the second at least one Representation that the first at least one Representation is associated with.

In an embodiment, the attribute is at a set level. In an embodiment, the attribute is at a Representation level. In an embodiment, data carried in a Representation is identified by a value of a @codec attribute.

In an embodiment, an adaptive streaming system comprises a server operable to transmit a media presentation description (MPD) manifest, and one or more Representations. A client is operable to receive the manifest, the manifest having a first set containing a first at least one Representation associated with a second set containing a second at least one media Representation and an attribute listing identifiers of the second at least one Representation that the first at least one Representation is associated with.

In an embodiment, a non-transitory computer readable medium stores a media presentation description (MPD) manifest that defines formats to announce resource identifiers to a client device for a collection of encoded and deliverable versions of media content and timed metadata. The manifest comprises a first set containing a first at least one metadata Representation associated with a second set containing a second at least one Representation, and an attribute listing identifiers of the second at least one Representation that the first at least one Representation is associated with.

Additional features and advantages of the disclosure are set forth in the description which follows, and will become apparent from the description, or can be learned by practice of the principles disclosed herein by those skilled in the art.

### BRIEF DESCRIPTION OF THE DRAWINGS

In order to describe the manner in which the above-recited and other advantages and features of the disclosure can be obtained, a more particular description of the principles briefly described above will be rendered by reference to specific embodiments thereof, which are illustrated in the appended drawings. Understanding that these drawings depict only exemplary embodiments of the disclosure and are not therefore to be considered to be limiting of its scope, the principles herein are described and explained with additional specificity and detail through the use of the accompanying drawings in which:
FIGURE 1 illustrates a DASH standards-based dynamic adaptive media streaming system and its components;
FIGURE 2 illustrates the hierarchical data model of the Media Presentation Description (MPD) within a DASH-based system;
FIGURE 3 illustrates a functional block diagram of a conventional client and server pair in a client-managed adaptive streaming system, such as DASH;
FIGURE 4 illustrates a hierarchical data model of a modified MPD within a DASH-based system in accordance with the principles of the present disclosure;
FIGURE 5 illustrates elements and attributes for signaling on the AdaptationSet level including the new attribute @associateSetId;
FIGURE 6 illustrates elements and attributes for signaling on the Representation level including the new attribute @associateRepId;
FIGURE 7 is a diagram of one media Representation per metadata Representation in accordance with the principles of the present disclosure;
FIGURE 8 illustrates an exemplary MPD for one media Representation per metadata Representation in accordance with the principles of the present disclosure;
FIGURE 9 is a diagram of multiple media Representations per metadata Representation in accordance with the principles of the present disclosure;
FIGURE 10 illustrates an exemplary MPD for multiple media Representations per metadata Representation in accordance with the principles of the present disclosure;
FIGURE 11 is a block diagram of an adaptive streaming system in which the principles of the present disclosure may be practiced; and,
FIGURES 12A and 12B are overall block diagrams illustrating a client (or UE) and an eNodeB, respectively.

### DETAILED DESCRIPTION

The FIGURES and text below, and the various embodiments used to describe the principles of the present disclosure are by way of illustration only and are not to be construed in any way to limit the scope of the claimed disclosure. A person having ordinary skill in the art will readily recognize that the principles of the present disclosure may be implemented in any type of suitably arranged device or system. Specifically, while the present disclosure is described with respect to use in a cellular wireless environment, those will readily recognize other types of networks (e.g., wireless networks, wireline networks or combinations of wireless and wireline networks) and other applications without departing from the scope of the present disclosure.

Unless defined otherwise, all technical and scientific terms used herein have the same meaning as commonly understood by a person having ordinary skill in the art to which this disclosure belongs. Although any methods and materials similar or equivalent to those described herein can also be used in the practice or testing of the present disclosure, a limited number of the exemplary methods and materials are described herein.

As will be appreciated, aspects of the present disclosure may be embodied as a method, system, or computer program product. Accordingly, aspects of the present disclosure may take the form of an entirely hardware embodiment, an entirely software embodiment (including firmware, resident software, micro-code, etc.) or an embodiment combining software and hardware aspects that may all generally be referred to herein as a "circuit," "module" or "system". Field Programmable Gate Arrays (FPGAs), Application Specific Integrated Circuits (ASICs), Digital Signal Processors (DSPs) and general purpose processors alone or in combination, along with associated software, firmware and glue logic may be used to construct the present disclosure.

Furthermore, various aspects of the present disclosure may take the form of a computer program product on a computer-usable storage medium having computer-usable program code embodied in the medium. Any suitable computer usable or computer readable medium may be utilized. The computer-usable or computer-readable medium may be, for example but not limited to, a random access memory (RAM), a read-only memory (ROM), or an erasable programmable read-only memory (EPROM or Flash memory). Computer program code for carrying out operations of the present disclosure may be written in, for example but not limited to, an object oriented programming language, conventional procedural programming languages, such as Javascript, Extensible Markup Language (XML) or other similar programming languages.

Reference throughout this specification to "one embodiment", "an embodiment", "a specific embodiment", or "particular embodiment" means that a particular feature, structure, or characteristic described in connection with the particular embodiment is included in at least one embodiment and not necessarily in all particular embodiments. Thus, respective appearances of the phrases "in a particular embodiment", "in an embodiment", or "in a specific embodiment" in various places throughout this specification are not necessarily referring to the same embodiment. Furthermore, the particular features, structures, or characteristics of any specific embodiment may be combined in any suitable manner with one or more other particular embodiments.

Various units, circuits, or other components may be described or claimed as "configured to" perform a task or tasks. In such contexts, "configured to" is used to connote structure by indicating that the units/circuits/components include structure (e.g., circuitry) that performs the task or tasks during operation. As such, the unit/circuit/component can be said to be configured to perform the task even when the specified unit/circuit/component is not currently operational (e.g., is not on). The units/circuits/components used with the "configured to" language include hardware - for example, circuits, memory storing program instructions executable to implement the operation, etc.

As used herein, a "module," a "unit", an "interface," a "processor," an "engine," a "detector," or a "receiver," includes a general purpose, dedicated or shared processor and, typically, firmware or software modules that are executed by the processor. Depending upon implementation-specific or other considerations, the module, unit, interface, processor, engine, detector, or receiver, can be centralized or its functionality distributed and can include general or special purpose hardware, firmware, or software embodied in a computer-readable (storage) medium for execution by the processor. As used herein, a computer-readable medium or computer-readable storage medium is intended to include all mediums that are statutory, and to specifically exclude all mediums that are non-statutory in nature to the extent that the exclusion is necessary for a claim that includes the computer-readable (storage) medium to be valid. Known statutory computer-readable mediums include hardware (e.g., registers, random access memory (RAM), non-volatile (NV) storage, to name a few), but may or may not be limited to hardware.

Abbreviations used herein include UE for "User Equipment" such as a DASH client and eNodeB for "Evolved Node B" (aka as a base station) in LTE.

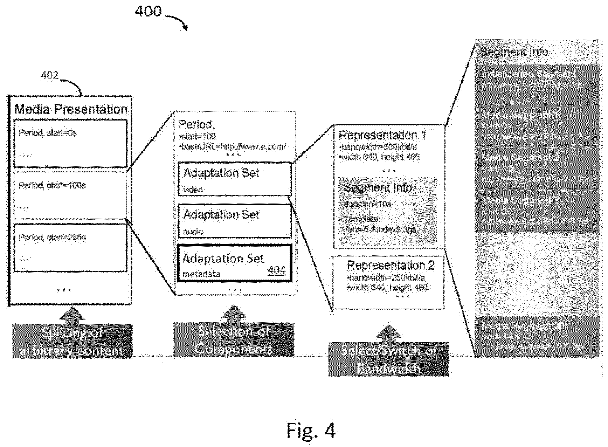

FIGURE 4 illustrates a hierarchical data model of a modified MPD 400 for use within a DASH-based system in accordance with the principles of the present disclosure. A media presentation 402 comprises one or more Periods. Each Period comprises one or more Adaptation Sets including an Adaptation Set containing timed metadata in accordance with principles of the present disclosure. Hereinafter, the Adaptation Set containing timed metadata may be referred to as the Metadata Set 404, as described in more detail hereinbelow.

The media Adaptation Sets contain alternate Representations with only one Representation within an Adaptation Set expected to be presented at a time. All Representations contained in any one Adaptation Set represent the same media content components (e.g. video or audio etc.). Representations are arranged into Adaptation Sets according to the media content component properties of the media content components present in the Representations, such as the language as described by the @lang attribute, the media component type described by the @contentType attribute, the picture aspect ratio as described by the @par attribute, the role property as described by the Role elements, the accessibility property as described by the Accessibility elements, the viewpoint property as described by the Viewpoint elements, the rating property as described by the Rating elements.

Representations appear in the same Adaptation Set if and only if they have identical values for all of these media content component properties for each media content component.

The ContentComponent element shares common elements and attributes with the AdaptationSet element. Default values, or values applicable to all media content components, may be provided directly in the AdaptationSet element. The AdaptationSet element supports the description of ranges for the @bandwidth, @width, @height and @frameRate attributes associated to the contained Representations, which provide a summary of all values for all the Representations within a particular Adaptation Set. Adaptation Sets may be further arranged into groups using the @group attribute.

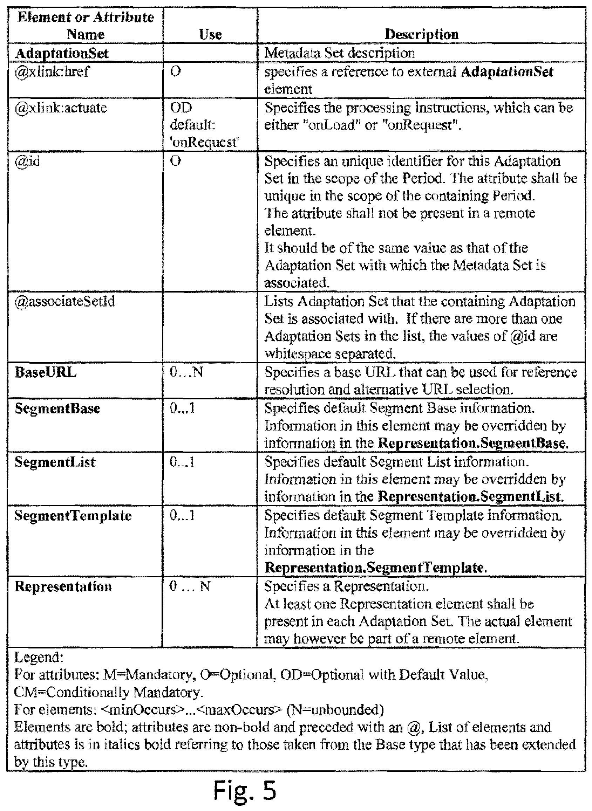

Reference is now made to FIGURE 5 that illustrates elements and attributes for signaling in a DASH based system on the AdaptationSet level including a new attribute @associateSetId. In order to express the relationship between a metadata Representation and a media Representation, the present disclosure provides an attribute at an Adaptation Set level (@associateSetId) that lists the values of @id of Adaptation Sets containing media Representations that the Adaptation Set containing metadata Representations is associated with. The @codecs attribute identifies if the Adaptation Set contains metadata Representations or media Representations.

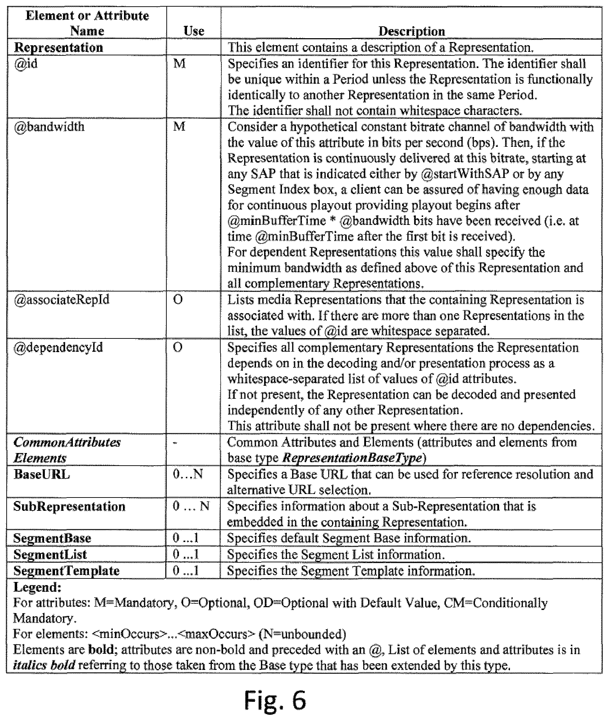

Reference is now made to FIGURE 6 that illustrates elements and attributes for signaling in a DASH based system on the Representation level including a new attribute @associateRepId. In accordance with another embodiment, an attribute @associateRepId is disclosed at the Representation level for metadata Representation listing media Representations that the metadata Representation is associated with in the associated AdaptationSet. If a metadata Representation contains metadata for multiple Representations (e.g., a metadata Representation contains multiple metadata tracks, each carrying quality information for a media track in a media Representation), the metadata Representation is associated with all media Representations and in this case if association at AdaptationSet is present, the @assoicateRepId attribute may be omitted.

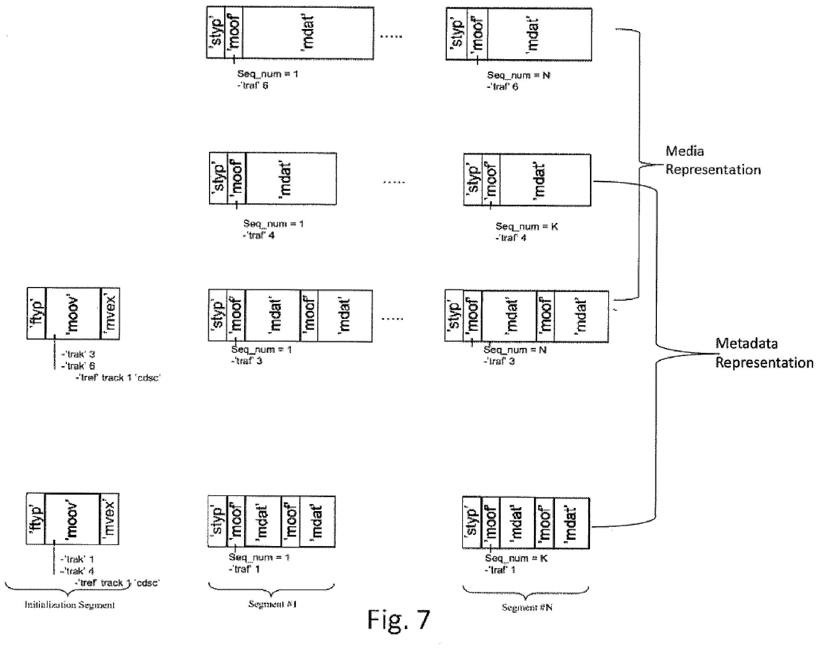

FIGURE 7 depicts a diagram of one media Representation per metadata Representation. A metadata Representation contains one metadata track carrying metadata for one media Representation. Specifically for quality information, it may occur if segment durations are different for Representations in an Adaptation Set.

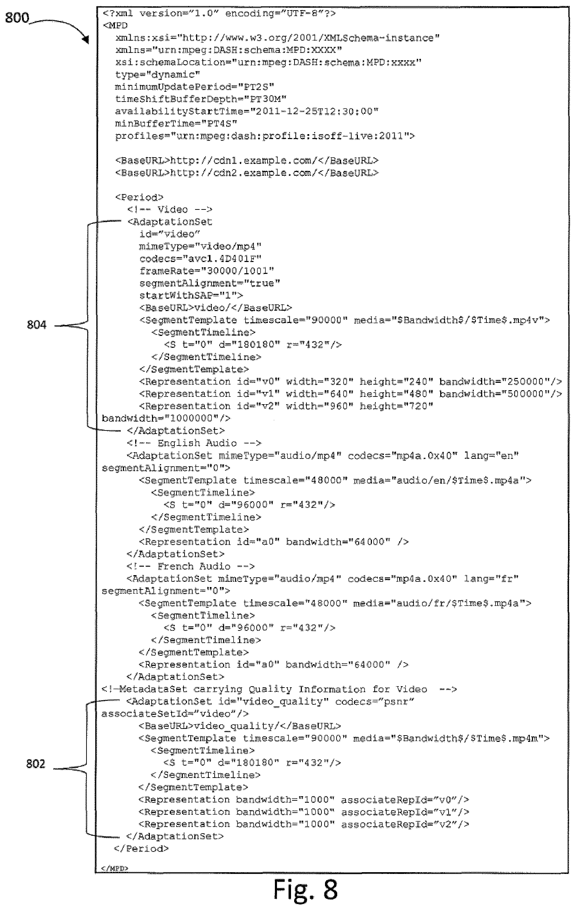

Referring to FIGURE 8, an exemplary MPD 800 is illustrated for one media Representation per metadata Representation. The exemplary MPD 800 includes an AdaptationSet 802 with @id "video_quality" containing metadata Representations associated with an AdaptationSet 804 containing media Representations with @id "video". The value of the attribute "codecs" at the AdaptationSet 802 indicates the metadata is of "video quality" type and metric is "psnr". There are three metadata Representations. Each metadata Representation carries quality information for a corresponding media Representation for which its value of @id is listed in the attribute @associateRepId. Segment URLs in the metadata Representation are given using a similar template as that of media Representation, but the path, i.e., BaseURL is different. The suffix of a metadata segment file is "mp4m".

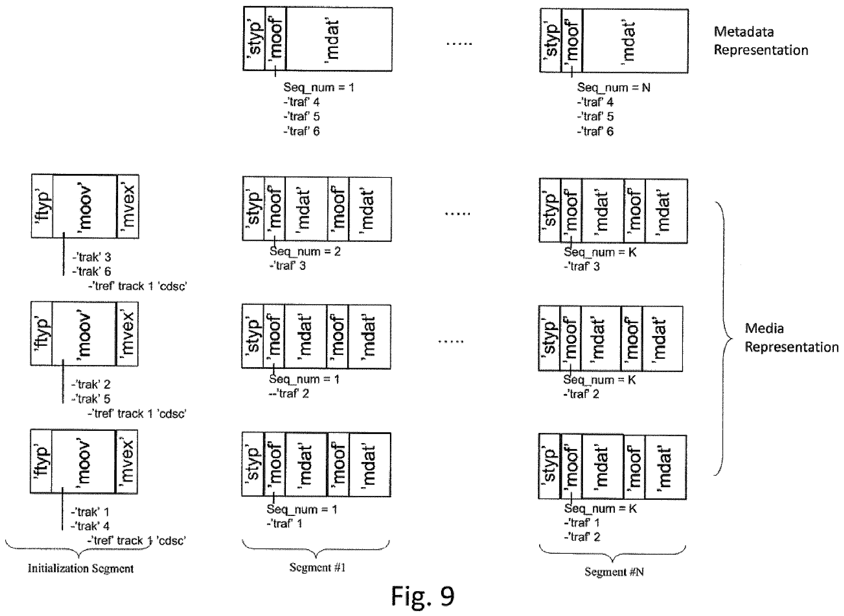

FIGURE 9 depicts a diagram of multiple media Representations per metadata Representation. A metadata Representation contains multiple metadata tracks carrying metadata for multiple media Representations. Specifically for quality information, it may occur if segments of the media Representations in the Adaptation Set are time aligned. This arrangement is to facilitate retrieval of metadata for all Representations.

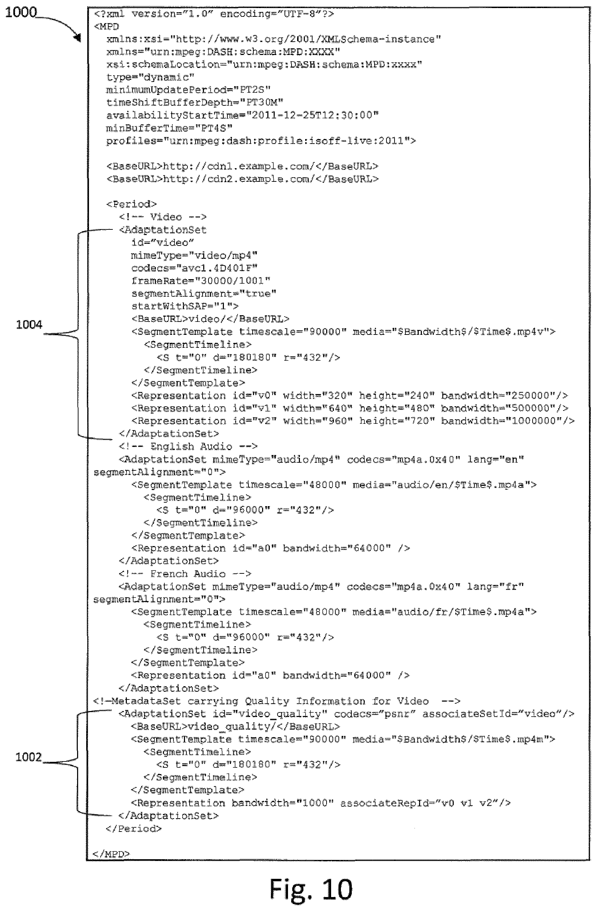

Referring now to FIGURE 10, an exemplary MPD 1000 for multiple media Representations per metadata Representation is illustrated. An AdaptationSet 1002 with @id "video_quality" containing metadata Representations is present which is associated with an AdaptationSet 1004 containing media Representations with @id "video". The value of attribute "codec" at the AdaptationSet 1002 indicates the metadata is of quality type and metric is "psnr". As the media Representations in the AdaptationSet 1004 are time aligned, their quality information is multiplexed and contained in one metadata Representation which has three metadata tracks, each corresponding to a media track in a media Representation. Segment URLs in the metadata Representation are given using a same template as that of media Representation, but the path, i.e. BaseURL is different. The suffix of a metadata segment file is "mp4m".

A segment in a metadata track, like any media segment, comprises a group of self-contained consecutive complete access units. A metadata segment and its associated media segment(s) are time aligned on a Segment boundary, or on a Sub-segment boundary if the media Segment contains more than one Media Sub-segment.

Metadata (e.g. quality information) can be easily added or modified without effecting on media content, enabling media content and metadata to be generated at different stages of content preparation. For example, live services are supported by updating the quality information metadata in the MPD.

If quality information is signaled for each segment in a MPD, the MPD becomes quite large in size resulting in increased start-up delay. By providing quality information in Representation(s), the MPD is not inflated and therefore start-up delay does not increase.

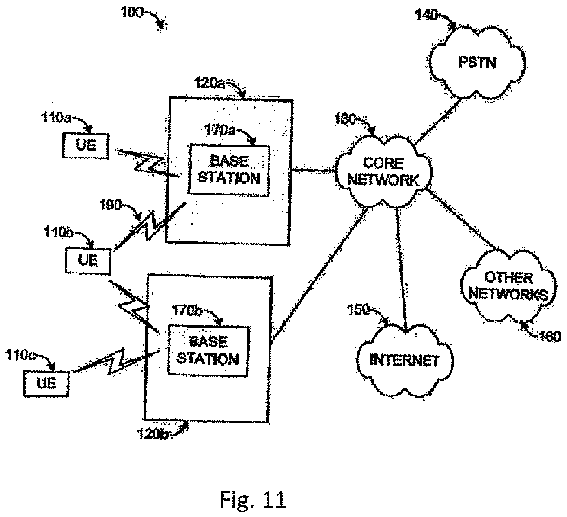

The present disclosure has broad application to wired terminals (e.g. a media home gateway) as well as to mobile terminals, for applications such as but not limited to, internet TV (IPTV services). FIGURE 11 illustrates an example communication system 100 that uses signaling to support advanced wireless receivers according to this disclosure. In general, the system 100 enables multiple wireless users to transmit and receive data and other content. The system 100 may implement one or more channel access methods, such as code division multiple access (CDMA), time division multiple access (TDMA), frequency division multiple access (FDMA), orthogonal FDMA (OFDMA), or single-carrier FDMA (SC-FDMA).

In this example, the communication system 100 includes user equipment (UE) 110a-110c, radio access networks (RANs) 120a-120b, a core network 130, a public switched telephone network (PSTN) 140, the Internet 150, and other networks 160. While certain numbers of these components or elements are shown in FIGURE 3, any number of these components or elements may be included in the system 100.

The UEs 110a-110c are configured to operate and/or communicate in the system 100. For example, the UEs 110a-110c are configured to transmit and/or receive wireless signals. Each UE 110a-110c represents any suitable end user device and may include such devices (or may be referred to) as a user equipment/device (UE), wireless transmit/receive unit (WTRU), mobile station, fixed or mobile subscriber unit, pager, cellular telephone, personal digital assistant (PDA), smartphone, laptop, computer, touchpad, wireless sensor, or consumer electronics device.

The RANs 120a-120b here include base stations 170a-170b, respectively. Each base station 170a-170b is configured to wirelessly interface with one or more of the UEs 110a-110c to enable access to the core network 130, the PSTN 140, the Internet 150, and/or the other networks 160. For example, the base stations 170a-170b may include (or be) one or more of several well-known devices, such as a base transceiver station (BTS), a Node-B (NodeB), an evolved NodeB (eNodeB), a Home NodeB, a Home eNodeB, a site controller, an access point (AP), or a wireless router.

In the embodiment shown in FIGURE 11, the base station 170a forms part of the RAN 120a, which may include other base stations, elements, and/or devices. Also, the base station 170b forms part of the RAN 120b, which may include other base stations, elements, and/or devices. Each base station 170a-170b operates to transmit and/or receive wireless signals within a particular geographic region or area, sometimes referred to as a "cell." In some embodiments, multiple-input multiple-output (MIMO) technology may be employed having multiple transceivers for each cell.

The base stations 170a-170b communicate with one or more of the UEs 110a-110c over one or more air interfaces 190 using wireless communication links. The air interfaces 190 may utilize any suitable radio access technology.

It is contemplated that the system 100 may use multiple channel access functionality, including such schemes as described above. In particular embodiments, the base stations and UEs implement LTE, LTE-A, and/or LTE-B. Of course, other multiple access schemes and wireless protocols may be utilized.

The RANs 120a-120b are in communication with the core network 130 to provide the UEs 110a-110c with voice, data, application, Voice over Internet Protocol (VoIP), or other services. Understandably, the RANs 120a-120b and/or the core network 130 may be in direct or indirect communication with one or more other RANs (not shown). The core network 130 may also serve as a gateway access for other networks (such as PSTN 140, Internet 150, and other networks 160). In addition, some or all of the UEs 110a-110c may include functionality for communicating with different wireless networks over different wireless links using different wireless technologies and/or protocols.

Although FIGURE 11 illustrates one example of a communication system, various changes may be made to FIGURE 11. For example, the communication system 100 could include any number of UEs, base stations, networks, or other components in any suitable configuration, and can further include the EPC illustrated in any of the figures herein.

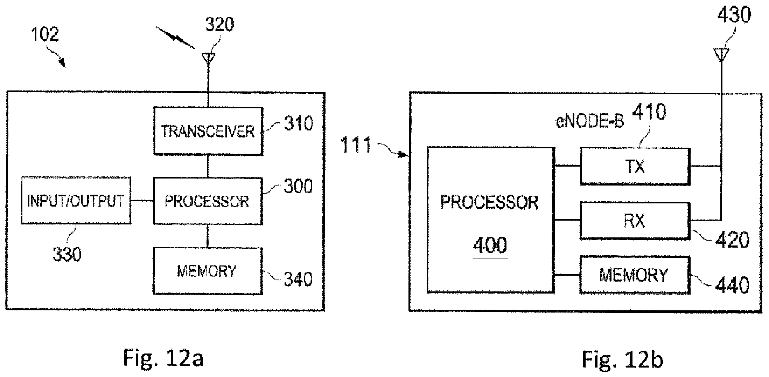

FIGURES 12A and 12B illustrate example devices that may implement the methods and teachings according to this disclosure. In particular, FIGURE 12A illustrates an example UE 110, and FIGURE 12B illustrates an example base station 170. These components could be used in the system 100 or in any other suitable system.

As shown in FIGURE 12A, the UE 110 includes at least one processing unit 200. The processing unit 200 implements various processing operations of the UE 110. For example, the processing unit 200 could perform signal coding, data processing, power control, input/output processing, or any other functionality enabling the UE 110 to operate in the system 100. The processing unit 200 also supports the methods and teachings described in more detail above. Each processing unit 200 includes any suitable processing or computing device configured to perform one or more operations. Each processing unit 200 could, for example, include a microprocessor, microcontroller, digital signal processor, field programmable gate array, or application specific integrated circuit.

The UE 110 also includes at least one transceiver 202. The transceiver 202 is configured to modulate data or other content for transmission by at least one antenna 204. The transceiver 202 is also configured to demodulate data or other content received by the at least one antenna 204. Each transceiver 202 includes any suitable structure for generating signals for wireless transmission and/or processing signals received wirelessly. Each antenna 204 includes any suitable structure for transmitting and/or receiving wireless signals. One or multiple transceivers 202 could be used in the UE 110, and one or multiple antennas 204 could be used in the UE 110. Although shown as a single functional unit, a transceiver 202 could also be implemented using at least one transmitter and at least one separate receiver.

The UE 110 further includes one or more input/output devices 206. The input/output devices 206 facilitate interaction with a user. Each input/output device 206 includes any suitable structure for providing information to or receiving information from a user, such as a speaker, microphone, keypad, keyboard, display, or touch screen.

In addition, the UE 110 includes at least one memory 208. The memory 208 stores instructions and data used, generated, or collected by the UE 110. For example, the memory 208 could store software or firmware instructions executed by the processing unit(s) 200 and data used to reduce or eliminate interference in incoming signals. Each memory 208 includes any suitable volatile and/or non-volatile storage and retrieval device(s). Any suitable type of memory may be used, such as random access memory (RAM), read only memory (ROM), hard disk, optical disc, subscriber identity module (SIM) card, memory stick, secure digital (SD) memory card, and the like.

As shown in FIGURE 12B, the base station 170 includes at least one processing unit 250, at least one transmitter 252, at least one receiver 254, one or more antennas 256, and at least one memory 258. The processing unit 250 implements various processing operations of the base station 170, such as signal coding, data processing, power control, input/output processing, or any other functionality. The processing unit 250 can also support the methods and teachings described in more detail above. Each processing unit 250 includes any suitable processing or computing device configured to perform one or more operations. Each processing unit 250 could, for example, include a microprocessor, microcontroller, digital signal processor, field programmable gate array, or application specific integrated circuit.

Each transmitter 252 includes any suitable structure for generating signals for wireless transmission to one or more UEs or other devices. Each receiver 254 includes any suitable structure for processing signals received wirelessly from one or more UEs or other devices. Although shown as separate components, at least one transmitter 252 and at least one receiver 254 could be combined into a transceiver. Each antenna 256 includes any suitable structure for transmitting and/or receiving wireless signals. While a common antenna 256 is shown here as being coupled to both the transmitter 252 and the receiver 254, one or more antennas 256 could be coupled to the transmitter(s) 252, and one or more separate antennas 256 could be coupled to the receiver (s) 254. Each memory 258 includes any suitable volatile and/or non-volatile storage and retrieval device(s).

Additional details regarding UEs 110 and base stations 170 are known to those of skill in the art. As such, these details are omitted here for clarity.

In addition, the EPC and/or EPC controller may include various devices or components as set forth in FIGURE 12B, such as a processor or processing system, memory, network interface, I/O devices, and/or a wireless transmitter/receiver, or combination thereof.

While this disclosure has described certain embodiments and generally associated methods, alterations and permutations of these embodiments and methods will be apparent to those skilled in the art. Accordingly, the above description of example embodiments does not define or constrain this disclosure. Other changes, substitutions, and alterations are also possible without departing from the scope of this disclosure, as defined by the following claims.

## Claims

1. A method used in Dynamic Adaptive Streaming over HTTP, DASH, comprising a Multimedia Presentation Description, MPD, manifest (1000) that defines formats to announce identifiers to a client device for a collection of encoded and deliverable versions of media content, for associating in the manifest (1000) a first at least one Representation with a second at least one Representation in adaptive streaming, the method comprising:
determining whether a first adaptation-set (804, 1004) of the manifest (1000) containing the first at least one Representation is associated with a second adaptation-set (802, 1002) of the manifest (1000) containing the second at least one Representation; and,
introducing an attribute, associateRepId, at Representation level in the second adaptation-set (1002), wherein the associateRepId lists identifiers of at least one first Representation in the first adaptation-set (1004) that the second at least one Representation in the second adaptation-set (1002) is associated with.

2. The method according to Claim 1 wherein data carried in a Representation is identified by a value of a @codec attribute.

3. The method according to Claim 1 wherein the first at least one Representation are timed metadata Representations and the second at least one Representation are media Representations.

4. The method according to Claim 3 wherein the timed metadata Representations are provided for media segments in the media Representations.

5. The method according to Claim 3 wherein the timed metadata Representations may contain index information identifying sub-segments contained in media segments of the media Representations.

6. A non-transitory computer readable medium used in Dynamic Adaptive Streaming over HTTP, DASH, storing a media presentation description (MPD) manifest (1000) that defines formats to announce resource identifiers to a client device for a collection of encoded and deliverable versions of media content, the manifest (1000) comprising:
an association between a first at least one Representation with a second at least one Representation in adaptive streaming, the association being performed according to the method of claim 1.

7. The non-transitory computer readable medium according to claim 6 wherein data carried in a Representation is identified by a value of a @codec attribute.

8. The non-transitory computer readable medium according to claim 6 wherein the first at least one Representation are timed metadata Representations and the second at least one Representation are media Representations.

9. The non-transitory computer readable medium according to claim 8 wherein the timed metadata Representations are provided for media segments in the media Representations.

10. The non-transitory computer readable medium according to claim 8 wherein the timed metadata Representations may contain index information identifying sub-segments contained in media segments of the media Representations.

11. The non-transitory computer readable medium according to claim 8 wherein the timed metadata Representations may contain other information such that a corresponding media sub-segment can be accessed without referencing other data.

## Patentansprüche

1. Verfahren, das bei einem dynamischen adaptiven Streaming über HTTP (*Dynamic Adaptive Streaming over HTTP -* DASH) verwendet wird, umfassend ein Multimediapräsentationsbeschreibungs(Multimedia *Presentation Description -* MPD)manifest (1000), das Formate definiert, um Bezeichner an eine Client-Vorrichtung für eine Sammlung von codierten und lieferbaren Versionen von Medieninhalten anzukündigen, um eine erste wenigstens eine Darstellung mit einer zweiten wenigstens einen Darstellung in dem adaptiven Streaming in dem Manifest (1000) zu verknüpfen, wobei das Verfahren Folgendes umfasst:
Bestimmen, ob ein erster Adaptionssatz (804, 1004) des Manifests (1000), der die erste wenigstens eine Darstellung enthält, mit einem zweiten Adaptionssatz (802, 1002) des Manifests (1000), der die zweite wenigstens eine Darstellung enthält, verknüpft ist; und
Einführen eines Attributs, associateRepId, auf Darstellungsebene in den zweiten Adaptionssatz (1002), wobei das associateRepId Bezeichner von wenigstens einer ersten Darstellung in dem ersten Adaptionssatz (1004) auflistet, mit denen die zweite wenigstens eine Darstellung in dem zweiten Adaptionssatz (1002) verknüpft ist.

2. Verfahren nach Anspruch 1, wobei Daten, die in einer Darstellung übertragen werden, durch einen Wert eines @codec-Attributs identifiziert werden.

3. Verfahren nach Anspruch 1, wobei die erste wenigstens eine Darstellung zeitgesteuerte Metadatendarstellungen sind und die zweite wenigstens eine Darstellung Mediendarstellungen sind.

4. Verfahren nach Anspruch 3, wobei die zeitgesteuerten Metadatendarstellungen für Mediensegmente in den Mediendarstellungen bereitgestellt werden.

5. Verfahren nach Anspruch 3, wobei die zeitgesteuerten Metadatendarstellungen Indexinformationen enthalten können, die in Mediensegmenten der Mediendarstellungen enthaltene Teilsegmente identifizieren.

6. Nichtflüchtiges, computerlesbares Medium, das bei dem dynamischen adaptiven Streaming über HTTP (DASH) verwendet wird und ein Medienpräsentationsbeschreibungs(MPD)manifest (1000) speichert, das Formate definiert, um Ressourcenbezeichner an eine Client-Vorrichtung für eine Sammlung von codierten und lieferbaren Versionen von Medieninhalten anzukündigen, wobei das Manifest (1000) Folgendes umfasst:
eine Verknüpfung zwischen einer ersten wenigstens einen Darstellung mit einer zweiten wenigstens einen Darstellung in dem adaptiven Streaming, wobei das Verknüpfen gemäß dem Verfahren nach Anspruch 1 durchgeführt wird.

7. Nichtflüchtiges computerlesbares Speichermedium nach Anspruch 6, wobei Daten, die in einer Darstellung übertragen werden, durch einen Wert eines @codec-Attributs identifiziert werden.

8. Nichtflüchtiges computerlesbares Speichermedium nach Anspruch 6, wobei die erste wenigstens eine Darstellung zeitgesteuerte Metadatendarstellungen sind und die zweite wenigstens eine Darstellung Mediendarstellungen sind.

9. Nichtflüchtiges computerlesbares Speichermedium nach Anspruch 8, wobei die zeitgesteuerten Metadatendarstellungen für Mediensegmente in den Mediendarstellungen bereitgestellt werden.

10. Nichtflüchtiges computerlesbares Speichermedium nach Anspruch 8, wobei die zeitgesteuerten Metadatendarstellungen Indexinformationen enthalten können, die in Mediensegmenten der Mediendarstellungen enthaltene Teilsegmente identifizieren.

11. Nichtflüchtiges computerlesbares Medium nach Anspruch 8, wobei die zeitgesteuerten Metadatendarstellungen andere Informationen derart enthalten können, dass auf ein entsprechendes Medienteilsegment zugegriffen werden kann, ohne auf andere Daten zu verweisen.

## Revendications

1. Procédé utilisé dans la diffusion continue dynamique adaptative sur HTTP, DASH, comprenant un manifeste (1000) de description de présentation multimédia, MPD, qui définit des formats pour annoncer des identificateurs à un dispositif client pour une collection de versions codées et livrables de contenu multimédia, pour associer dans le manifeste (1000) au moins une première représentation avec au moins une seconde représentation en diffusion continue adaptative, le procédé consistant à :
déterminer si un premier ensemble d'adaptation (804, 1004) du manifeste (1000) contenant ladite première représentation est associé à un second ensemble d'adaptation (802, 1002) du manifeste (1000) contenant ladite seconde représentation ; et,
introduire un attribut, associateRepId, au niveau de représentation dans le second ensemble d'adaptation (1002), dans lequel l'associateRepId liste les identificateurs d'au moins une première représentation dans le premier ensemble d'adaptation (1004) à laquelle ladite seconde représentation dans le second ensemble d'adaptation (1002) est associée.

2. Procédé selon la revendication 1 dans lequel les données portées dans une représentation sont identifiées par une valeur d'un attribut @codec.

3. Procédé selon la revendication 1, dans lequel ladite première représentation est une représentation de métadonnées temporisées et ladite seconde représentation est une représentation de contenu multimédia.

4. Procédé selon la revendication 3 dans laquelle les représentations de métadonnées temporisées sont fournies pour des segments de contenu multimédia dans les représentations de contenu multimédia.

5. Procédé selon la revendication 3, dans lequel les représentations de métadonnées temporisées peuvent contenir des informations d'index identifiant des sous-segments contenus dans des segments de contenu multimédia des représentations de contenu multimédia.

6. Support lisible par ordinateur non transitoire utilisé dans la diffusion continue dynamique adaptative sur HTTP, DASH, stockant un manifeste (1000) de description de présentation multimédia (MPD) qui définit des formats pour annoncer des identificateurs de ressources à un dispositif client pour une collection de versions codées et livrables de contenu multimédia, le manifeste (1000) comprenant :
une association entre au moins une première représentation et au moins une seconde représentation en diffusion continue adaptative, l'association étant effectuée selon le procédé de la revendication 1.

7. Support lisible par ordinateur non transitoire selon la revendication 6, dans lequel les données portées dans une représentation sont identifiées par une valeur d'un attribut @codec.

8. Support lisible par ordinateur non transitoire selon la revendication 6, dans lequel ladite première représentation est une représentation de métadonnées temporisées et ladite seconde représentation est une représentation de contenu multimédia.

9. Support lisible par ordinateur non transitoire selon la revendication 8, dans lequel les représentations de métadonnées temporisées sont fournies pour des segments de contenu multimédia dans les représentations de contenu multimédia.

10. Support lisible par ordinateur non transitoire selon la revendication 8, dans lequel les représentations de métadonnées temporisées peuvent contenir des informations d'index identifiant des sous-segments contenus dans des segments de contenu multimédia des représentations de contenu multimédia.

11. Support lisible par ordinateur non transitoire selon la revendication 8, dans lequel les représentations de métadonnées temporisées peuvent contenir d'autres informations de telle sorte qu'un sous-segment de contenu multimédia correspondant peut être accédé sans référence à d'autres données.
